# EUROPÄISCHE PATENTSCHRIFT

(11) **EP 1 348 862 B1**
(45) Veröffentlichungstag und Bekanntmachung des Hinweises auf die Patenterteilung: **06.10.2004**
(21) Anmeldenummer: 02028284.4
(22) Anmeldetag: 17.12.2002
(51) Int. Cl.: F02M 37/10, F16K 31/06

(54) **Elektromagnetische Stellvorrichtung**
Electromagnetic regulating device
Dispositif de reglage electromagnetique

(30) Priorität: 27.03.2002 DE 10213696
(43) Veröffentlichungstag der Anmeldung: 01.10.2003
(73) Patentinhaber: Pierburg GmbH, 41460 Neuss (DE)
(72) Erfinder: Buse, Werner, 41564 Kaarst (DE); Zurke, Janusz, 42277 Wuppertal (DE); Lorkowski, Eduard, 78050 Willingen (DE)
(74) Vertreter: Ter Smitten, Hans

(56) Entgegenhaltungen:
- EP-A- 0 806 595
- EP-A- 0 899 144
- WO-A-98/42973
- PATENT ABSTRACTS OF JAPAN vol. 012, no. 067 (M-673), 2. März 1988 (1988-03-02) -& JP 62 214263 A (NIPPON DENSO CO LTD), 21. September 1987 (1987-09-21)

## Beschreibung

Die Erfindung betrifft eine elektromagnetische Stellvorrichtung für fluidumströmte Magnetventile, insbesondere im Kraftstoffbehälter einer Verbrennungskraftmaschine mit mindestens einer Spule, mit mindestens zwei Elektroanschlußkontakten, einem Anker, einem Ankergegenstück und einem Rückschlußblech.

In den letzten Jahren werden zunehmend die Bauteile des Kraftstoffversorgungssystems in den emissionsgeschützten Kraftstofftank eingebracht. Neben den Kraftstoffpumpen und Druckreglern zählen auch zunehmend Magnetventile im Kraftstoffsystem zu den im Kraftstoffvorratsbehälter unterzubringenden Bauteilen. Der Grund für diese Verlagerung sind die strengen Emissionsgrenzwerte, insbesondere in den USA bezüglich der Kohlenwasserstoffemissionen. An Kraftstoff führenden Leitungen und Bauteilen kommt es zur Permeation von Kohlenwasserstoffmolekülen durch den verwendeten Kunststoff. Insbesondere Bauteilverbindungen, die in der Vergangenheit oft durch Schlauchanschlüsse mit Schlauchklemmen realisiert wurden, sind sehr permeationsfreudig und müssen daher aufgrund der strengen Emissionsgrenzwerte in freier Atmosphäre vermieden werden.

Im Kraftstoffvorratsbehälter kommt es jedoch durch die Kraftstoffströmung in den Kunststoffbauteilen zu elektrostatischen Aufladungen, die auf die metallischen Bauteile übertragen werden. So sind zwischen offen zugänglichen Metallteilen von Pumpen, Reglern, Ventilen usw. elektrostatische Spannungen in Höhe von mehreren kV meßbar. Es entsteht die Gefahr von Entladungen durch Funkenüberschlag und somit eine Explosionsgefahr bei Vorhandensein eines zündfähigen Gemisches im Kraftstofftank. Dieses bildet sich insbesondere bei niedrigen Temperaturen, da zu diesem Zeitpunkt eine geringe Kraftstoffverdampfung im Kraftstoffvorratsbehälter stattfindet. Bei einem nur zum Teil gefüllten Tank kommt dann über die Entlüftungsventile Sauerstoff durch die Luft in den Kraftstofftank.

Insbesondere in kalten Wintermonaten können diese Bedingungen auftreten, so daß alle Metallteile, die im Kraftstoffvorratsbehälter fluidumströmt sind, geerdet werden müssen, d.h. mittels eines elektrischen Verbindungselements zu einem Kontakt geführt und mit einer Fahrzeugmasse bzw. dem Minuspol der Batterie verbunden werden.

Eine solche Verbindung zur Fahrzeugmasse findet für die im Kraftstoffvorratsbehälter befindlichen Aggregate zur Zeit über Verbindungsleitungen statt, die von den fluidumströmten metallischen Bauteilen der Aggregate zu einem sogenannten "Erdbahnhof" geführt werden, der mit der Fahrzeugmasse über eine Verbindungsleitung elektrisch verbunden ist.

Bei einem heute üblichen kunststoffumspritzten Magnetventil ist es vorteilhaft, im Innem eine geschlossene Kunststofffläche zum strömenden Medium zu haben, um eine geforderte Dichtigkeit gegenüber dem strömenden Medium erzielen zu können. Ein eiserner Magnetkreis des Ventils liegt im Kunststoff und ist somit zu einer Magnetwicklung, Elektrokontakten und zum strömenden Medium hin isoliert. Lediglich ein Ankergegenstück, auch als Kem bezeichnet, stellt eine Verbindung zwischen strömendem Medium und zum isolierten Magnetkreis her. Da dieses Bauteil aus elektrisch leitfähigem Material besteht und am äußeren Ende fluidumströmt ist, nach innen jedoch isoliert, kann sich hier eine elektrostatische Aufladung aufbauen. Eine Ableitung dieser über eine elektrische Verbindungsleitung zu einem "Erdbahnhof" ist also zwingend erforderlich.

Für eine derartige Verbindung der fluidumströmten Bauteile mit der Fahrzeugmasse über Erdbahnhöfe" benötigt man jedoch erstens eine Verbindungsleitung vom "Erdbahnhof" zur Fahrzeugmasse, als auch die einzelnen Verbindungsleitungen von besagten fluidumströmten Bauteilen zum "Erdbahnhof", so daß ein hoher Verkabelungsaufwand entsteht, der erst beim Einbau der einzelnen Aggregate durchzuführen ist.

Der vorliegenden Erfindung liegt daher die Aufgabe zugrunde, den Verkabelungsaufwand zu minimieren und die Verbindung mit der Fahrzeugmasse bereits im Fertigungsprozess sicherzustellen.

Diese Aufgabe wird dadurch gelöst, daß das Ankergegenstück in elektrischer Verbindung mit dem Rückschlußblech steht und ein elektrisch leitendes Verbindungselement zwischen dem Rückschlußblech und einem der Elektroanschlußkontakte vorgesehen ist, wodurch eine Verbindung zwischen dem Ankergegenstück und der Fahrzeugmasse besteht.

Dabei wird die Verbindung zwischen Ankergegenstück und Rückschlußblech beispielsweise durch eine Preßsitzpassung zwischen dem Außendurchmesser des Ankergegenstücks und dem inneren Aufnahmedurchmesser des Rückschlußbleches hergestellt. Eine weitere vorteilhafte Ausführung dieser Verbindungsstelle ist es, das Ankergegenstück mit einer Rändelung im Bereich der Verbindungsstelle mit dem Rückschlußblech auszuführen, wodurch eine Metallberührung zwischen beiden Bauteilen sichergestellt wird. Der Vorteil der Version mit Rändelung des Endstückes des Ankergegenstückes ist die geringere Einpreßkraft.

Vorteilhafte Ausführungen des Anschlusses der elektrischen Verbindungsleitung am Rückschlußblech können sowohl formschlüssig z.B. über eine Nut oder ein Loch im Rückschlußblech oder eine entsprechende Ausformung des Elektroanschlusskontaktes, so dass er einen Berührungspunkt mit dem Rückschlussblech aufweist, als auch stoffschlüssig, also über Schweiß- oder Lötverbindungen als auch kraftschlüssig z.B. über eine Schraub- oder Nietverbindung sein.

Bei diesen Ausführungen ist es möglich, die Anschlußstelle des Verbindungselementes am Rückschlußblech mit den übrigen Bauteilen des Ventils mit Kunststoff zu umspritzen bzw. in Kunststoffteile einzubetten, was eine große Unempfindlichkeit des Ventils und der elektrischen Anschlussstellen bewirkt..

Bei einer solchen Ausführungsform kann die Verbindung des fluidumströmten Bauteils, hier insbesondere des Ankergegenstrücks mit der Fahrzeugmasse bereits bei der Fertigung der Spule mit dem Rückschlußblech stattfinden. Es entfällt des Weiteren die Verwendung der oben erwähnten "Erdbahnhöfe" und somit der Verkabelung zwischen den "Erdbahnhöfen" und der Fahzeugmasse bzw. von den fluidumströmten Bauteilen zum "Erdbahnhof". Ausführungsbeispiele der Erfindung sind in den Zeichnungen dargestellt und werden nachfolgend beschrieben.

Figur 1 zeigt einen Querschnitt einer ersten Ausführungsform eines erfindungsgemäßen fluidumströmten Magnetventils mit Verbindungselement.

Figur 2 zeigt eine Seitenansicht des Elektromagnetventils mit elektrisch leitendem Verbindungselement, wobei zur Verdeutlichung dieser Verbindung die nicht relevanten Bauteile des Elektromagnetventils nicht dargestellt sind.

Figur 3 zeigt die Kopfansicht dieser erfindungsgemäßen Ausführung des Elektromagnetventils.

Figur 4 zeigt eine weitere erfindungsgemäße Ausführung mit formschlüssigem Verbindungselement.

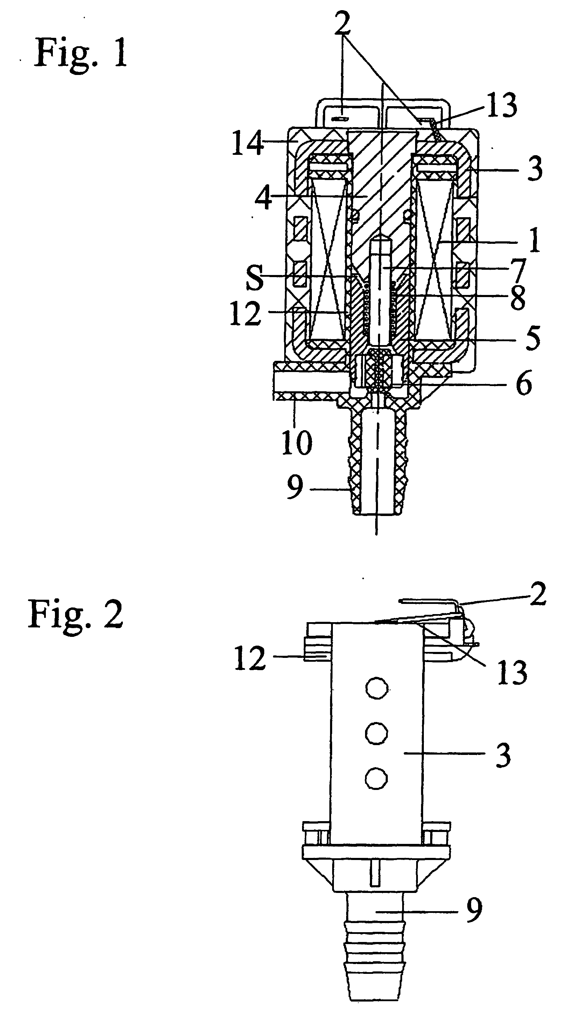

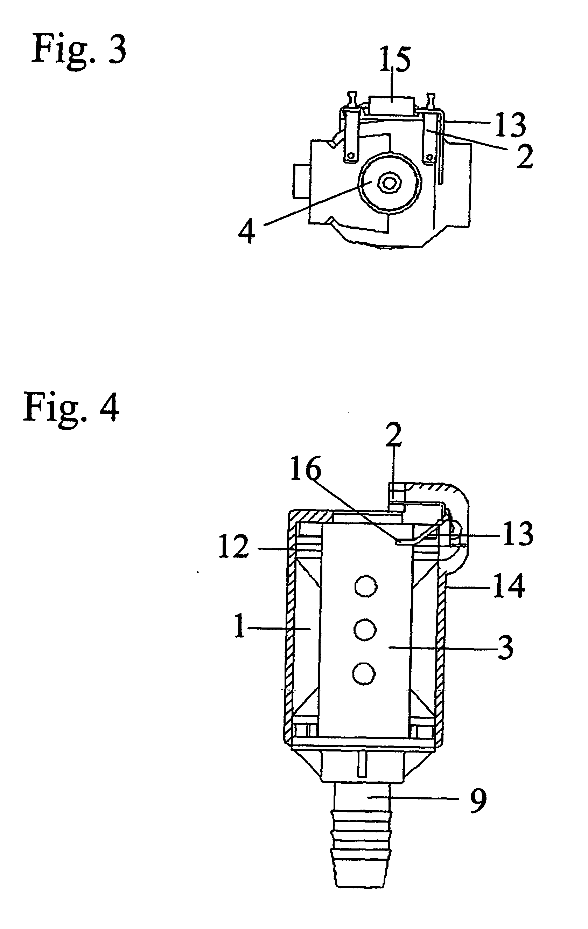

Die elektromagnetische Stellvorrichtung des in Figur 1 dargestellten fluidumströmten Magnetventils besteht aus der Spule 1 mit ihren Anschlußkontakten 2 und dem magnetischen Eisenkreis, der aus dem Joch oder Rückschlußblech 3 sowie dem Kern oder Ankergegenstück 4 und dem Anker 5 besteht. Wird nun die Spule 1 bestromt, entsteht induktiv ein elektromagnetisches Feld, dessen Feldlinien vom Anker 5 über das die Spule 1 umgebende Joch 3 in das Ankergegenstück bzw. Kern 4 weisen. Von dort treten die Feldlinien über einen Arbeitsluftspalt S wieder in den Anker. Hierdurch bildet sich zwischen Anker 5 und Ankergegenstück 4 eine elektromagnetische Kraft, welche den Anker 5 zum Ankergegenstück 4 zieht. In Figur 1 ist der Anker 5 formschlüssig mit dem Ventilschließglied 6 verbunden. In das Ankergegenstück 4 ist ein Anschlagstift 7 eingepreßt, der als Anschlagpunkt für das Ventilschließglied 6 dient. Um den Anschlagstift 7 herum ist eine Schraubenfeder 8, welche ihre Auflagepunkte am Anker 5 und am Ankergegenstück 4 hat und somit den Anker 5 vom Ankergegenstück 4 wegdrückt. Diese Schraubenfederkraft muß durch die elektromagnetische Kraft zwischen Anker 5 und Ankergegenstück 4 überwunden werden, um das Ventil zu öffnen, also das Ventilschließglied 6 vom Ventilsitz abzuheben. Wird also das Ventilschließglied 6 vom Ventilsitz gehoben, so entsteht eine fluidische Verbindung zwischen dem Einlaßstutzen 9 und dem Auslaßstutzen 10. Sie sind Teil des Ventilkörpers 12, auf den die Spule 1 gewickelt ist und in den Anker 5 und Ankergegenstück 4 eingebracht sind. Des Weiteren wird über ein elektrisch leitendes Element 13 eine Verbindung zwischen dem Anschlußkontakt 2, der mit der Fahrzeugmasse bzw. dem Minuspol der Batterie verbunden ist, und dem Rückschlußblech 3 ein Kontakt hergestellt. In Figur 1 ist ein solcher Kontakt durch Schweißen oder Löten dargestellt. Diese Verbindung sollte vor dem Kunststoffumspritzen des Ventils stattfinden, um die Verbindungsstelle zum Rückschlußblech 3 zusätzlich zu sichern und eine einfache Verbindung zum Rückschlußblech 3 sicherzustellen. Diese Kunstoffumspritzung bzw. der Mantel 14 ist in Figur 1 dargestellt. In Figur 2 ist noch einmal dieses Verbindungselement 13 zwischen Anschlußkontakt 2 und Rückschlußblech 3 zu erkennen. Auch in Figur 3 ist dieses Verbindungselement 13 zu erkennen sowie die beiden Anschlußkontakte 2 mit dem dazwischenliegenden Widerstand 15.

Eine weitere erfindungsgemäße Ausführungsform ist in Figur 4 dargestellt. Hier ist in das Rückschlußblech 3 eine Nut 16 eingefräst, in die das Verbindungselement 13 vor dem Umspritzen des Ventils gesteckt wird.

Das in den Bildern dargestellte elektrische Verbindungselement ist in den Ausführungsbeispielen eine einfache Weiterführung des Kontaktdrahtes des Widerstandes zum Rückschlußblech, so daß keine neuen oder zusätzlichen Anschlußpunkte an den Anschlußkontakten 2 notwendig sind.

Durch die dargestellten Möglichkeiten der elektrischen Verbindung zwischen den Anschlukontakten 2 und dem Rückschlußblech 3 ist sichergestellt, daß eine Verbindung zwischen dem Ankergegenstück 4 und der Fahrzeugmasse über die Anschlußkontakte 2 und das Verbindungselement 13 besteht. Somit kann eine elektrische Aufladung des fluidumströmten Ankergegenstücks 4, der als einziges Bauteil eine Verbindung zwischen dem strömenden Medium und zum isolierten Magnetkreis herstellt, abgeführt werden.

Weitere vorteilhafte Ausführungen sind bereits weiter oben erwähnt.

Es sollte klar sein, dass diese Art der Verbindung einer elektromagnetischen Stellvorrichtung mit der Fahrzeugmasse für anders ausgeführte Elektromagnetventile unterschiedlich ausgeführt werden kann.

## Patentansprüche

1. Elektromagnetische Stellvorrichtung für fluidumströmte Magnetventile, insbesondere im Kraftstoffbehälter einer Verbrennungskraftmaschine mit mindestens einer Spule (1), mit mindestens zwei Elektroanschlußkontakten (2), einem Anker, einem Ankergegenstück (4) und einem Rückschlußblech (3), **dadurch gekennzeichnet, daß** das Ankergegenstück (4) in elektrischer Verbindung mit dem Rückschlußblech (3) steht und ein elektrisch leitendes Verbindungselement (13) zwischen dem Rückschlußblech (3) und einem der Elektroanschlußkontakte (2) vorgesehen ist, wodurch eine Verbindung zwischen dem Ankergegenstück (4) und einer Fahrzeugmasse besteht.

2. Elektromagnetische Stellvorrichtung nach Anspruch 1, **dadurch gekennzeichnet, daß** der Elektroanschlußkontakt (2) einen Berührungspunkt zum Rückschlußblech (3) aufweist.

3. Elektromagnetische Stellvorrichtung nach Anspruch 1 oder 2, **dadurch gekennzeichnet, daß** das Verbindungselement (13) formschlüssig, insbesondere durch Stecken des Verbindungselementes (13) in eine Nut (16) oder ein Loch im Rückschlußblech (3), mit diesem verbunden ist.

4. Elektromagnetische Stellvorrichtung nach einem der vorhergehenden Ansprüche, **dadurch gekennzeichnet, daß** das Verbindungselement (13) stoffschlüssig, insbesondere durch Schweiß- oder Lötpunkte, mit dem Rückschlußblech (3) verbunden ist.

5. Elektromagnetische Stellvorrichtung nach einem der vorhergehenden Ansprüche, **dadurch gekennzeichnet, daß** das Verbindungselement (13) kraftschlüssig, insbesondere durch Schrauben oder Nieten, mit dem Rückschlußblech (3) verbunden ist.

6. Elektromagnetische Stellvorrichtung nach einem der vorhergehenden Ansprüche, **dadurch gekennzeichnet, daß** die Passung zwischen dem Außendurchmesser des Ankergegenstücks (4) und dem inneren Aufnahmedurchmesser des Rückschlußbleches (3) ein Preßsitz ist.

7. Elektromagnetische Stellvorrichtung nach einem der vorhergehenden Ansprüche, **dadurch gekennzeichnet, daß** der äußere Durchmesser des Ankergegenstücks (4) an der Verbindungsstelle zum Rückschlußblech (3) eine Rändelung aufweist, die eine Metallberührung zwischen beiden Bauteilen sicherstellt.

8. Elektromagnetische Stellvorrichtung nach einem der vorhergehenden Ansprüche, **dadurch gekennzeichnet, daß** das Verbindungselement (13) zwischen Rückschlußblech (3) und Elektroanschlußkontakt (2) mit dem Ventil kunststoffumspritzt bzw. in Kunststoffteile eingebettet wird.

9. Kraftstoffdruckregelventil, welches über eine elektromagnetische Stellvorrichtung gemäß einem der vorhergehenden Ansprüche gesteuert ist.

## Claims

1. Electromagnetic regulating device for solenoid valves around which fluid flows, in particular in the fuel tank of an internal combustion engine, with at least one coil (1), with at least two electrical connection contacts (2), an armature, an armature mating piece (4) and a return plate (3), **characterised in that** the armature mating piece (4) is electrically connected to the return plate (3), and an electrically conductive connecting element (13) is provided between the return plate (3) and one of the electrical connection contacts (2), whereby there is a connection between the armature mating piece (4) and a vehicle ground.

2. Electromagnetic regulating device according to Claim 1, **characterised in that** the electrical connection contact (2) has a point of contact with the return plate (3).

3. Electromagnetic regulating device according to Claim 1 or 2, **characterised in that** the connecting element (13) is positively connected to the return plate (3), in particular by inserting the connecting element (13) in a groove (16) or a hole in the return plate.

4. Electromagnetic regulating device according to any one of the preceding Claims, **characterised in that** the connecting element (13) is integrally connected to the return plate (3), in particular through welding or soldering points.

5. Electromagnetic regulating device according to any one of the preceding Claims, **characterised in that** the connecting element (13) is non-positively connected to the return plate (3), in particular through screws or rivets.

6. Electromagnetic regulating device according to any one of the preceding Claims, **characterised in that** the fit between the outer diameter of the armature mating piece (4) and the inner holding diameter of the return plate (3) is an interference fit.

7. Electromagnetic regulating device according to any one of the preceding Claims, **characterised in that** the outer diameter of the armature mating piece (4) at the connecting point with the return plate (3) comprises knurling which guarantees metal contact between the two components.

8. Electromagnetic regulating device according to any one of the preceding Claims, **characterised in that** the connecting element (13) between the return plate (3) and the electrical connection contact (2) is coated with a plastics material or embedded in plastics parts with the valve.

9. Fuel regulating valve which is controlled via an electromagnetic regulating device according to any one of the preceding Claims.

## Revendications

1. Dispositif de réglage électromagnétique pour des électrovannes balayées par un fluide, en particulier dans le réservoir de carburant d'un moteur à combustion interne, comprenant au moins une bobine (1), au moins deux contacts de jonction électrique (2), un induit (5), un pendant d'induit (4) et une tôle de fermeture de circuit (3), **caractérisé en ce que** le pendant d'induit (4) est en liaison électrique avec la tôle de fermeture de circuit (3) et un élément de jonction conducteur électriquement (13) est prévu entre la tôle de fermeture de circuit (3) et l'un des contacts de jonction électrique (2), une liaison existant de ce fait entre le pendant d'induit (4) et une masse du véhicule.

2. Dispositif de réglage électromagnétique suivant la revendication 1, **caractérisé en ce que** le contact de jonction électrique (2) présente un point de contact avec la tôle de fermeture de circuit (3).

3. Dispositif de réglage électromagnétique suivant l'une des revendications 1 et 2, **caractérisé en ce que** l'élément de jonction (13) est assemblé avec la tôle de fermeture de circuit (3) par coopération de forme, en particulier par emmanchement de l'élément de jonction (13) dans une rainure (16) ou un trou de la tôle de fermeture de circuit (3).

4. Dispositif de réglage électromagnétique suivant l'une des revendications précédentes, **caractérisé en ce que** l'élément de jonction (13) est assemblé avec la tôle de fermeture de circuit (3) par alliance de matière, en particulier par des points de soudage ou de brasage.

5. Dispositif de réglage électromagnétique suivant l'une des revendications précédentes, **caractérisé en ce que** l'élément de jonction (13) est assemblé avec la tôle de fermeture de circuit (3) par force d'adhérence, en particulier par vissage ou rivetage.

6. Dispositif de réglage électromagnétique suivant l'une des revendications précédentes, **caractérisé en ce que** l'ajustement entre le diamètre extérieur du pendant d'induit (4) et le diamètre de logement intérieur de la tôle de fermeture de circuit (3) est un ajustement serré.

7. Dispositif de réglage électromagnétique suivant l'une des revendications précédentes, **caractérisé en ce que** le diamètre extérieur du pendant d'induit (4) présente au point de jonction avec la tôle de fermeture de circuit (3) un moletage, qui garantit un contact métallique entre les deux composants.

8. Dispositif de réglage électromagnétique suivant l'une des revendications précédentes, **caractérisé en ce que** l'élément de jonction (13) entre la tôle de fermeture de circuit (3) et le contact de jonction électrique (2) est noyé par injection de matière plastique ou enrobé dans des éléments en matière plastique avec la soupape.

9. Soupape de régulation de pression de carburant qui est commandée par l'intermédiaire d'un dispositif de réglage électromagnétique suivant l'une des revendications précédentes.
